# EUROPEAN PATENT APPLICATION

(11) **EP 2 365 423 A2**
(43) Date of publication of application: **14.09.2011**
(21) Application number: 11157829.0
(22) Date of filing: 11.03.2011
(51) Int. Cl.: G06F 3/03

(54) **Touch object and proximate object sensing apparatus by selectively radiating light**

(30) Priority: 12.03.2010 KR 20100022321
(71) Applicant: Samsung Electronics Co., Ltd., Gyeonggi-do 442-742 (KR)
(72) Inventor: Yi, Kwon Ju, 446-712 Gyeonggi-do (KR); Choi, Chang Kyu, 446-712 Gyeonggi-do (KR); Park, Du Sik, 446-712 Gyeonggi-do (KR); Han, Jae Joon, 446-712 Gyeonggi-do (KR); Yoo, Byung In, 446-712 Gyeonggi-do (KR); Suh, Sung Joo, 446-712 Gyeonggi-do (KR)
(74) Representative: Land, Addick Adrianus Gosling

(57) **Abstract**

Provided is a touch object and proximate object sensing apparatus by selectively radiating a light. An object sensing apparatus may separately use a touch light source to sense a touch image generated by an object touching a light guide, and a hovering light source to sense a target image generated by an object proximate to the light guide. The light guide may emit, to an upper portion of the light guide, an invisible light radiated from the hovering light source to enhance a sensation of sensing the proximate object.

## Description

This application claims the benefit of Korean Patent Application No. 10-2010-0022321, filed on March 12, 2010, in the Korean Intellectual Property Office, the disclosure of which is incorporated herein by reference.

### BACKGROUND

One or more embodiments of the present disclosure relate to a touch object and proximate object sensing apparatus that may sense a touch image generated by an object touching a display or a target image generated by a proximate object close to the display.

### 2. Description of the Related Art

With recent developments in display technology, interest in technology for identifying a location of an object touching a display has increased. In particular, as a display size becomes larger, content displayed on the display may be dragged frequently.

There may be constraints on sensing the dragged content when the sensing is limited to only sensing a touched location on a display panel.

Accordingly, there is a desire for sensing technology that may sense a touch image generated by a touch object and a target image generated by a proximate object.

### SUMMARY

According to an aspect of one or more embodiments, there may be provided an object sensing apparatus including ,a hovering light source to radiate invisible light for sensing a target image generated by a target object, a touch light source to radiate invisible light for sensing a touch image generated by a touch object, and a light guide to receive the invisible light radiated by the touch light source and the invisible light radiated by the hovering light source and to upwardly direct the invisible light radiated from the hovering light source.

The touch light source may be disposed on one side of the light guide, and the hovering light source may be disposed on another side of the light guide to be perpendicular to the touch light source.

A plurality of hovering light sources or a plurality of touch light sources may be connected to sides of the light guide in a widthwise direction and is disposed in a line source form.

The object sensing apparatus may further include a display panel being disposed below the light guide to display the touch image or the target image.

The object sensing apparatus may further include a sensing array being disposed below the display panel to sense the invisible light radiated from the touch light source and reflected by the object, or the invisible light radiated from the hovering light source and reflected by the object, and a visible light source being disposed below or on one side of the display panel to radiate a visible light for displaying an image on the display panel.

The object sensing apparatus may further include a sensing camera being disposed below the display panel to sense the invisible light radiated from the touch light source and reflected by the object, or the invisible light radiated from the hovering light source and reflected by the object, and a visible light source being disposed below the display panel to radiate a visible light for displaying an image on the display panel.

The display panel may include a plurality of glass plates to display an information image, a liquid crystal being provided between the plurality of glass plates, an LCD panel to display the information image, and a backlight unit being disposed below the LCD panel to provide a uniform planar white light to the LCD panel.

The display panel may be a transparent organic light emitting diode (OLED) panel to include a transparent layer of transmitting a light between pixels.

The display panel may be an opaque OLED panel having a sensing array inserted to sense the invisible light radiated from the touch light source and reflected by the object, or the invisible light radiated from the hovering light source and reflected by the object.

The opaque material may be disposed below a predetermined pattern formed within the light guide, and may include a reflecting layer below the predetermined pattern.

According to another aspect of one or more embodiments, there may be provided an object sensing apparatus for sensing an object. The object sensing apparatus includes a hovering light source to radiate invisible light for sensing a target image generated by the object, a light guide to receive the invisible light radiated by the hovering light source, and a reflecting layer to reflect, to a top surface of the light guide, the invisible light radiated from the hovering light source.

The reflecting layer may include a first reflecting layer to reflect the light reflected from the hovering light source, and a second reflecting layer to reflect, to the top surface of the light guide, the light reflected by the first reflecting layer.

According to still another aspect of one or more embodiments, there may be provided an object sensing apparatus including a touch light source to radiate invisible light for sensing a touch image generated by an object, a hovering light source to directly radiate, to the object, invisible light for sensing a target image generated by the object, and a light guide to perform a total internal reflection of a light incident from the touch light source.

The touch light source and the hovering light source may be disposed on the same side of the light guide, and the touch light source may be disposed on the hovering light source.

According to still another aspect of one or more embodiments, a touch object and proximate object sensing apparatus including a light guide having a substantially planar surface may be provided. The apparatus may include a hovering lighting unit positioned at an edge of the light guide and radiating light into the light guide to detect a position of a target object positioned above the planar surface of the light guide, and a multi-touch lighting unit positioned at an edge of the light guide and radiating light into the light guide to detect a position of a touch object contacting the planar surface of the light guide based on a total internal reflection of the light radiated by the multi-touch lighting unit

Additional aspects, features, and/or advantages of embodiments will be set forth in part in the description which follows and, in part, will be apparent from the description, or may be learned by practice of the disclosure.

### BRIEF DESCRIPTION OF THE DRAWINGS

These and/or other aspects and advantages will become apparent and more readily appreciated from the following description of the embodiments, taken in conjunction with the accompanying drawings of which:
FIG. 1 illustrates an object sensing apparatus using multiple touches and a proximate object according to an embodiment;
FIGS. 2 through 6 illustrate various structures of a display panel used in the object sensing apparatus of FIG. 1 according to an embodiment;
FIGS. 7 through 9 illustrate various structures of a light source unit used in an object sensing apparatus according to an embodiment;
FIG. 10 illustrates an optical path of an invisible light radiated from a hovering light source at the light source unit of FIG. 7; and
FIG. 11 illustrates an optical path of an invisible light radiated from a touch light source at the light source unit of FIG. 7.

### DETAILED DESCRIPTION

Reference will now be made in detail to embodiments, examples of which are illustrated in the accompanying drawings, wherein like reference numerals refer to the like elements throughout. Embodiments are described below to explain the present disclosure by referring to the figures.

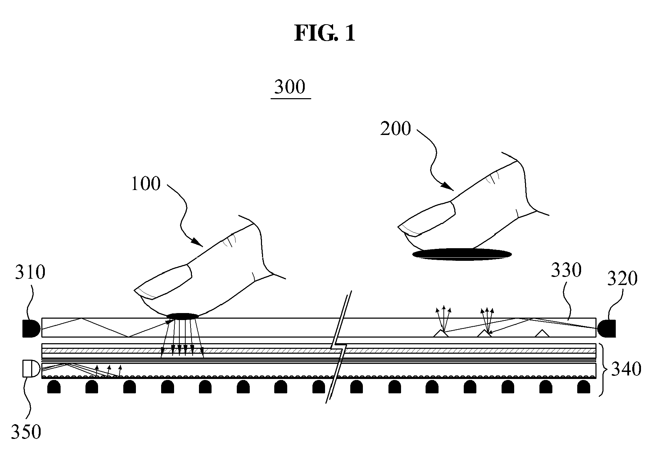

FIG. 1 is a diagram illustrating an object sensing apparatus 300 using multiple touches and a proximate object according to an embodiment.

Referring to FIG. 1, the object sensing apparatus 300 using multiple touches or a proximate object may include, for example, a touch light source 310, a hovering light source 320, a light guide 330, and a display panel 340.

The touch light source 310 includes an invisible light source for touch sensing and may be disposed at one end of the light guide 330.

The touch light source 310 may radiate an invisible light for sensing a touch image generated by a touch object 100. For example, the invisible light for the touch image may be an infrared ray (IR) or an ultraviolet ray (UV). In an embodiment, touch information may be substantially simultaneously sensed by one or more different touch objects 100.

The hovering light source 320 corresponds to an invisible light source for hovering sensing and may be disposed at another end of the light guide 330. The hovering light source 320 may radiate an invisible light for sensing a target image generated by a proximate object 200 located a proximate distance from the object sensing apparatus 300. For example, the invisible light for sensing the target image may be an IR or a UV. In an embodiment, the hovering light source 320 may be used to allow for sensing position information of the proximate object, for example, a hovering object that is located a proximate distance above a planar surface of the light guide or the display.

An object may be located on the light guide 330 or be spaced apart within a sensible distance from the light guide 330. Specifically, the touch image may be generated by the touch object 100 touching the light guide 330. The target image may be generated by the proximate object 200 spaced apart at a proximate distance from the light guide 330, e.g., a hovering object located a proximate distance above a planar surface of the light guide or the display.

The light guide 330 may perform a total internal reflection (TIR) of the invisible light radiated from the touch light source 310 and the hovering light source 320 to an inside of the light guide 330, or may emit the invisible light to an upper portion of the light guide 330.

For example, when the invisible light is radiated from the touch light source 310, the light guide 330 may perform a TIR of the invisible light radiated from the touch light source 310, to the inside of the light guide 330. When an object, for example, a stylus or a hand of a user touches the light guide 330, the TIR caused within the light guide 330 by the object 110 may be a frustrated total internal reflection (FTIR).

When the invisible light is radiated from the hovering light source 320, the light guide 330 may emit, to a top surface of the light guide 330, the invisible light radiated from the hovering light source 320.

The display panel 340 may be disposed below the light guide 330 to display an information image and may include a visible light source such as visible light source 350.

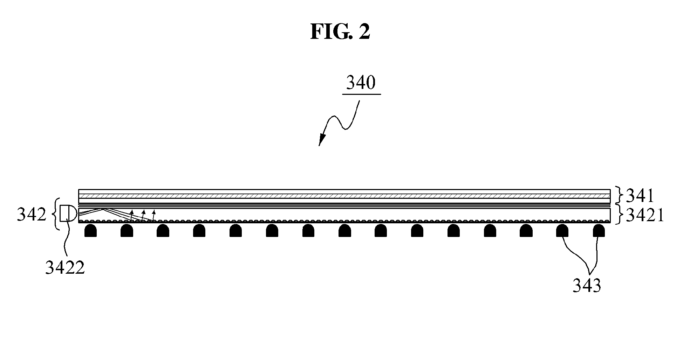

As one example of the display panel 340 of FIG. 1, as shown in FIG. 2, the display panel 340 may include a liquid crystal display (LCD) panel 341, a backlight unit 342, and a sensing array 343.

The LCD panel 341 may be disposed below the light guide 330, and may include a liquid crystal between glass plates to display the information image.

The backlight unit 342 may be disposed below the LCD panel 341, and may include a light enhancement film 3421 and a visible light source 3422.

The visible light source 3422 may be disposed at one end of the backlight unit 342 to radiate a visible light. The visible light source 3422 may be provided in a form of a line source, for example, a cold cathode fluorescent lamp (CCFL), or a point source, for example, a light emitting diode (LED).

The visible light source 3422 may also be disposed in a direct type below the backlight unit 342.

The light enhancement film 3421 may provide a uniform planar white light to the LCD panel 341 using the visible light radiated from the visible light source 3422.

The sensing array 343 may be provided below the backlight unit 342 to sense the invisible light radiated from the touch object 100 or the proximate object 200.

For example, the sensing array 343 may sense a touch image generated by the touch object 100 or a target image generated by the proximate object 200.

The sensing array 343 may include at least one invisible light sensor capable of sensing the invisible light. For example, the at least one invisible light sensor may use a photo diode, a phototransistor, and the like.

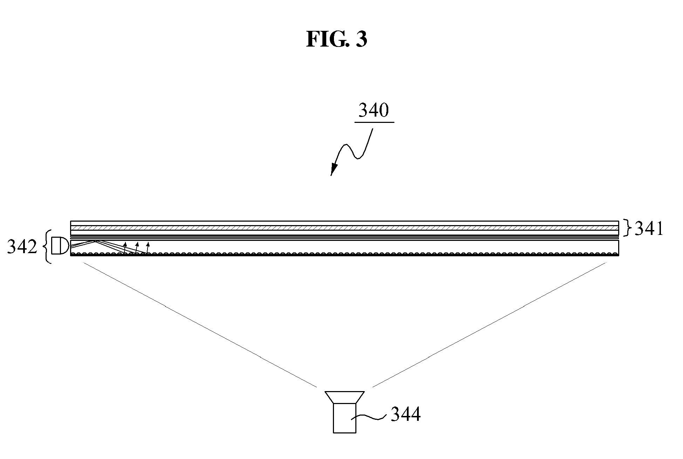

As another example of the display panel 340 of FIG. 1, as shown in FIG. 3, the display panel 340 may include an LCD panel 341, a backlight unit 342, and a sensing camera 344. Since the LCD panel 341 and the backlight unit 342 of FIG. 3 are configured to be similar to those shown in FIG. 2, further description related thereto will be omitted.

The sensing camera 344 may be disposed below the backlight unit 342 to sense the invisible light reflected from the touch object 100 or the proximate object 200.

For example, the sensing camera 344 may sense a touch image generated by the touch object 100 or a target image generated by the proximate object 200. In an embodiment, the sensing camera 344 may be an infrared or an ultraviolet camera.

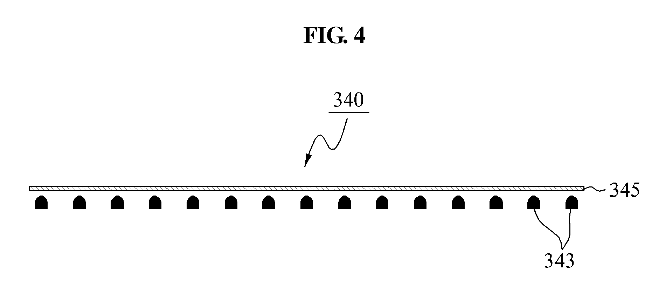

As still another example of the display panel 340 of FIG. 1, as shown in FIG. 4, the display panel 340 may include a sensing array 343 and an organic light emitting diode (OLED) panel 345.

The OLED panel 345 may be disposed below the light guide 330 to display an information image. For example, the OLED panel 345 may use a transparent OLED panel having a transparent layer of transmitting a light between pixels, and a translucent OLED panel having a translucent layer of transmitting a light between pixels.

The sensing array 343 may be disposed below the OLED panel 345 to sense the invisible light reflected by the touch object 100 or the proximate object 200. For example, the sensing array 343 may sense a touch image generated by the touch object 100 or a target image generated by the proximate object 200.

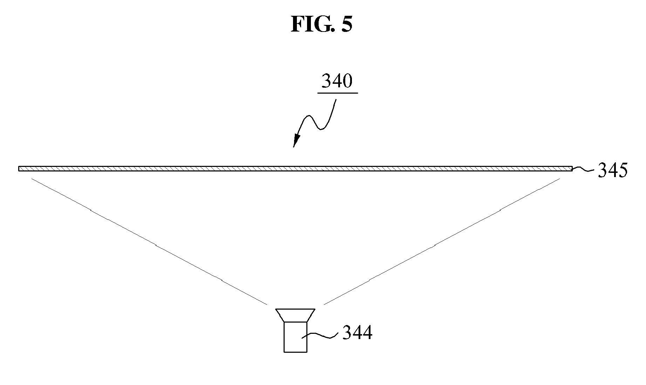

Referring to FIG. 5, the display panel 340 may include a sensing camera 344 instead of the sensing array 343.

The sensing camera 344 may be disposed below the OLED panel 345 to sense the invisible light reflected by the touch object or the proximate object 200. For example, the sensing camera 344 may sense a touch image generated by the touch object 100 or a target image generated by the proximate object 200.

As shown in FIGS. 4 and 5, the OLED panel 345 may be used instead of the LCD panel 341. When the OLED panel 345 is used, the backlight unit 342 may be omitted in the display panel 340.

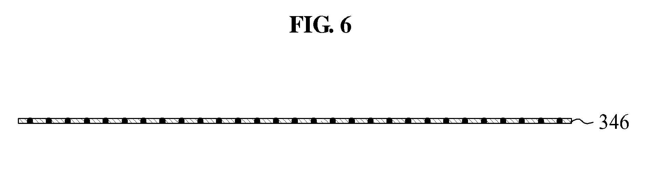

As yet another example of the display panel 340 of FIG. 1, as shown in FIG. 6, an opaque OLED panel 346 having a sensing array inserted may be used for the display panel 340 of FIG. 1.

The display panel 340 may be configured so that the sensing array for sensing the invisible light is inserted between pixels in the opaque OLED panel 346.

The opaque OLED panel 346 having the inserted sensing array may display an information image and may also sense the invisible light reflected by the touch object 100 or the proximate object 200.

For example, the opaque OLED panel 346 having the inserted sensing array may sense a touch image generated by the touch object 100 or a target image generated by the proximate object 200. The opaque OLED panel 346 having the inserted sensing array may be disposed below the light guide 330.

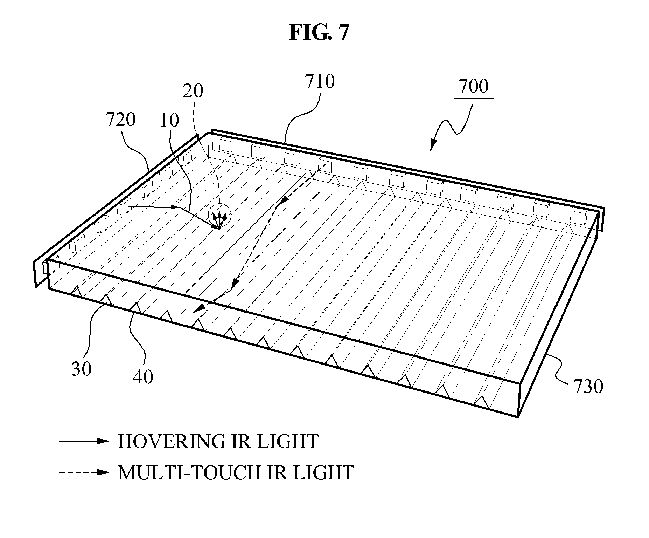

Hereinafter, various structures of a light source unit used in the object sensing apparatus 300 of FIG. 1 according to an embodiment will be described with reference to FIGS. 7 through 11. Each of light source units 700, 800, and 900 may include the touch light source 310, the hovering light source 320, and the light guide 330 of FIG. 1. A basic configuration of each of the light source units 700, 800, and 900 may be configured to be the same or similar to that shown in FIG. 1 and thus further description related thereto will be omitted here.

FIG. 7 illustrates a configuration of the light source unit 700 capable of emitting light in different directions according to an embodiment.

Referring to FIG. 7, the light source unit 700 may include, for example, a touch light source 710, a hovering light source 720, and a light guide 730.

The touch light source 710 may be disposed on one side of the light guide 730 to radiate, to the light guide 730, an invisible light for sensing a touch image generated by a touch object. The touch light source 710 may radiate the invisible light in a line source form where a plurality of IR LEDs is connected in a widthwise direction, for example, arranged linearly along an edge of a length of light guide 730.

When the light guide 730 is touched by the touch object, the touch light source 710 may radiate the invisible light. When a proximate object close to the light guide is sensed, the touch light source 710 may not radiate the invisible light.

The hovering light source 720 may be disposed on another side of the light guide 730 that is perpendicular to the side where the touch light source 710 is disposed. The hovering light source 720 may radiate the invisible light in a line source form where a plurality of IR LEDs is arranged linearly and connected in a widthwise direction, for example, along an edge of a width of light guide 730.

For example, when the proximate object close to the light guide 730 is sensed, the hovering light source 720 may radiate invisible light. When the light guide 730 is touched by the touch object 100, the hovering light source 720 may not radiate invisible light.

The light guide 730 may perform a TIR of a light incident from the touch light source 710. In this instance, a wave guide may be used for the light guide 730.

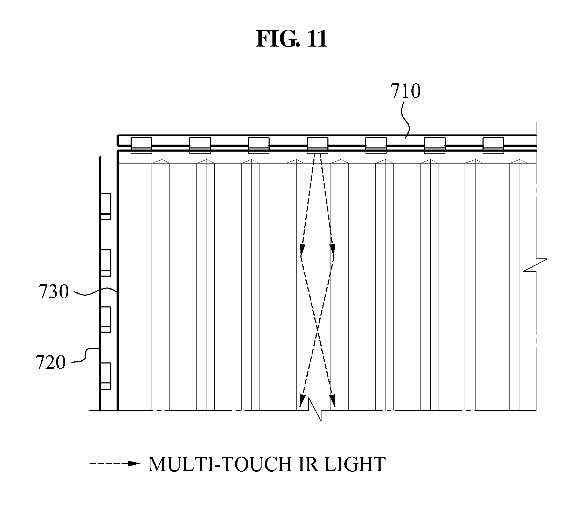

For example, as shown in FIG. 11, the invisible light radiated from the touch light source 710 may contact a predetermined pattern formed within the light guide 730 and thereby be internally reflected. An incidence angle of the radiated invisible light contacting the predetermined pattern may not exceed a predetermined threshold angle and thus the invisible light radiated from the touch light source 710 may be totally internally reflected within the light guide 730. For example, a prism pattern in various polygonal shapes such as a triangle, a rectangle, a pentagon, a hexagon, and the like may be formed within the light guide 730. A U pattern in a circular shape, a semi-circular shape, and the like may also be formed within the light guide 730.

The light guide 730 may emit, to a top surface of the light guide 730, the light incident from the hovering light source 720. For example, the predetermined pattern may be formed perpendicular to a progress direction of the invisible light radiated from the hovering light source 720 to an inside of the light guide 730. In this case, a pattern cut in a V shape may be formed in the light guide 730.

The light guide 730 may include an opaque material 30.

For example, the opaque material 30 may be disposed within the predetermined pattern formed on the light guide 730. A reflecting layer 40 may be formed in a lower portion of the predetermined pattern using the opaque material 30. The invisible light radiated from the hovering light source 720 to be incident into the light guide 730 may be spread whereby a progress direction of the incident invisible light may be changed towards an upper portion 20 of the light guide 730.

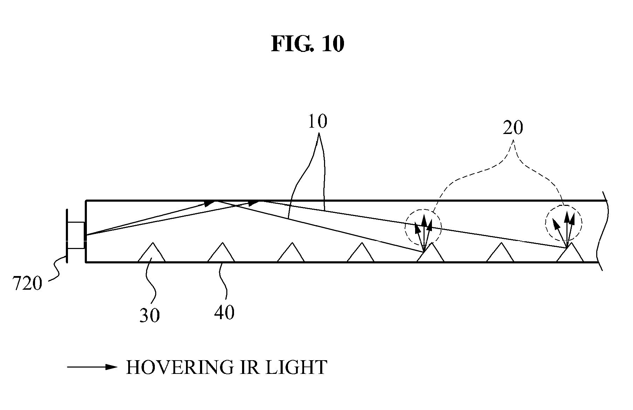

For example, the invisible light radiated from the hovering light source 720 to be incident into the inside of the light guide 730 may be reflected by the reflecting layer 40 formed in the predetermined pattern and thereby be emitted towards the upper portion 20 of the light guide 730. Accordingly, as shown in FIG. 10, the progress direction of the invisible light incident from the hovering light source 720 to the inside of the light guide 730 may be changed from a direction 10 perpendicular to the predetermined pattern to the upper portion 20 of the light guide 730.

In this case, when the display panel 340 of FIG. 1 is disposed below the light guide 730 and the LCD panel 341 is used for the display panel 340, the predetermined pattern formed in the light guide 730 may be formed of opaque material 30, which may affect an image displayed on the LCD panel 341. The display panel 340 may sense the invisible light and display an information image.

Accordingly, the opaque material 30 may be disposed on a black matrix of the LCD panel 341. A width of the predetermined pattern may be finely adjusted by a width of the black matrix formed on a color filter within the LCD panel 341. Accordingly, the effect on the image displayed on the LCD panel 341 may be decreased.

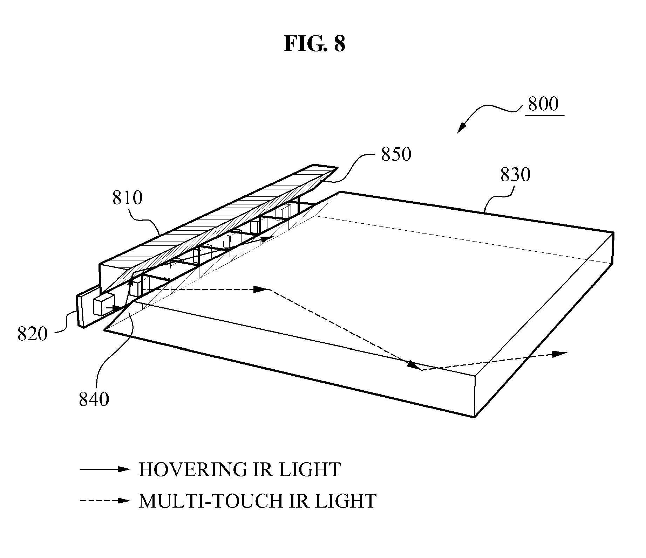

FIG. 8 illustrates a configuration of light source unit 800 emitting an invisible light using a reflecting layer according to an embodiment.

Referring to FIG. 8, the light source unit 800 may include, for example, a touch light source 810, a hovering light source 820, and a light guide 830.

The touch light source 810 may be disposed on one side of light guide 830, and may radiate, towards light guide 830, an invisible light for sensing a touch image generated by a touch object.

The touch light source 810 may be disposed in a line source form where a plurality of IR LEDs is arranged linearly and connected in a widthwise direction above the hovering light source 820.

For example, when the light guide 830 is touched by the touch object, the touch light source 810 may radiate the invisible light. When a proximate object close to the light guide 830 is sensed, the touch light source 810 may not radiate the invisible light.

The hovering light source 820 may be disposed on the same side of the light guide 830 as the side where the touch light source 810 is disposed, and may radiate the invisible light for sensing a target image generated by the proximate object.

The hovering light source 820 may radiate the invisible light towards a first reflecting layer 840 in a line source form where a plurality of IR LEDs is arranged linearly and connected in a widthwise direction.

For example, when the proximate object close to the light guide 830 is sensed, the hovering light source 820 may radiate the invisible light. When the light guide 830 is touched by the touch object, the hovering light source 820 may not radiate the invisible light.

When the hovering light source 820 is disposed on only one side of the light guide 830, the hovering light source 820 alone may not uniformly light the entire space. The touch light source 810 and the hovering light source 820 may be alternately disposed on different sides of the light guide 830 to uniformly light the entire space.

The reflecting layer may reflect the invisible light radiated from the hovering light source 820 to emit the invisible light to a top plane of the light guide 830.

The reflecting layer may include, for example, the first reflecting layer 840 and a second reflecting layer 850.

The first reflecting layer 840 may reflect, towards the second reflecting layer 850, the invisible light radiated from the hovering light source 820. The first reflecting layer 840 may be disposed to be inclined from a lower portion of the light guide 830 towards an upper portion of the light guide 830.

The second reflecting layer 850 may be disposed to the first reflecting layer 840, and facing the first reflecting layer 840, and to have an angle of inclination.

As described above, since the first reflecting layer 840 and the second reflecting layer 850 are disposed to face each other, the invisible light radiated from the hovering light source 820 may be continuously reflected between the first reflecting layer 840 and the second reflecting layer 850, and then may be emitted towards the proximate object. Specifically, to emit the invisible light radiated from the hovering light source 820 towards the proximate object close to the optical guide 830, the progress direction of the invisible light may be reflected by the first reflecting layer 840 and the second reflecting layer 850 and may be changed. A reflection mirror may be used for the first reflecting layer 840 and the second reflecting layer 850.

An example of reflecting the invisible light radiated from the hovering light source 820 towards the proximate object using two reflecting layers is described above with reference to FIG. 8. However, it is only an example and thus the invisible light radiated from the hovering light source 820 may be emitted towards the proximate object using a single reflecting layer or at least three reflecting layers. For example, it is possible to increase or decrease a number of reflecting layers disposed in the object sensing apparatus 300 by adjusting an incidence angle of the disposed reflecting layers.

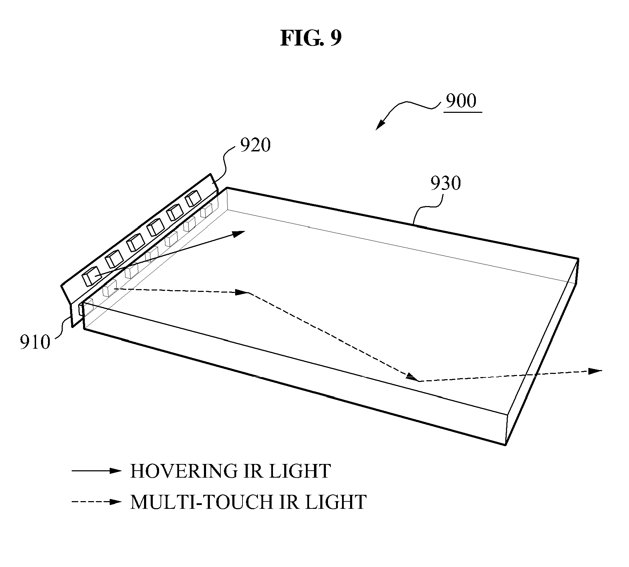

FIG. 9 illustrates a configuration of the light source unit 900 for directly emitting an invisible light towards an object.

Referring to FIG. 9, the light source unit 900 may include, for example, a touch light source 910, a hovering light source 920, and a light guide 930.

The touch light source 910 may be disposed on one side of the light guide 930 to radiate, towards the light guide 930, the invisible light for sensing a touch image generated by a touch object.

For example, the touch light source 910 may be provided in a line source form where a plurality of IR LEDs is arranged linearly and connected in a widthwise direction below the hovering light source 920.

When the light guide 930 is touched by the touch object, the touch light source 910 may radiate the invisible light source. When a proximate object close to the light guide 930 is sensed, the touch light source 910 may not radiate the invisible light.

The hovering light source 920 may be disposed on the same side of the light guide 930 as the side where the touch light source 910 is disposed, and may be disposed above the touch light source 910.

The hovering light source 920 may radiate the invisible light for sensing a target image generated by the proximate object.

For example, the hovering light source 920 may directly radiate the invisible light towards the proximate object in a line source form where a plurality of IR LEDs is arranged linearly and connected in a widthwise direction.

When the proximate object close to the light guide 930 is sensed, the hovering light source 920 may radiate the invisible light. When the light guide 930 is touched by the touch object, the hovering light source 920 may not radiate the invisible light.

According to one or more embodiments, a touch object and proximate object sensing apparatus may enhance a sensation of sensing an object proximate to a light guide using a touch light source and a hovering light source.

Although a few embodiments have been shown and described, it would be appreciated by those skilled in the art that changes may be made in these embodiments without departing from the principles and spirit of the disclosure, the scope of which is defined by the claims and their equivalents.

## Claims

1. An object sensing apparatus, comprising:
a hovering light source to radiate invisible light for sensing a target image generated by a target object; and
a light guide to upwardly direct a light incident from the hovering light source, and/or
a reflecting layer to reflect, to a top surface of the light guide, the invisible light radiated from the hovering light source.

2. The object sensing apparatus of claim 1, further comprising:
a touch light source to radiate invisible light for sensing a touch image generated by a touch object, the touch light source being disposed on one side of the light guide, and
wherein, the light guide performs a total internal reflection of light incident from the touch light source, and receives the invisible light radiated by the touch light source and/or the invisible light radiated by the hovering light source.

3. The object sensing apparatus of claim 1 or 2, further comprising:
an opaque material to form a pattern perpendicular to a progress direction of the invisible light radiated from the hovering light source to an inside of the light guide, and to reflect, to an upper portion of the light guide, the invisible light radiated from the hovering light source to the light guide; and
wherein a display panel is disposed below the light guide to display an information image.

4. The object sensing apparatus of any of claims 1-3, wherein:
the light guide is a wave guide,
the touch image is generated by an object touching the light guide, and
the target image is generated by an object spaced a distance apart from the light guide.

5. The object sensing apparatus of any of claims 1-4, wherein the reflecting layer comprises:
a first reflecting layer to reflect the light reflected from the hovering light source; and
a second reflecting layer to reflect, to the top surface of the light guide, the light reflected by the first reflecting layer.

6. The object sensing apparatus of claim 6, wherein:
the first reflecting layer is disposed to be inclined from a lower portion of the light guide towards the upper portion of the light guide, and
the second reflecting layer is disposed to the first reflecting layer and facing the first reflecting layer.

7. An object sensing apparatus, comprising:
a touch light source to radiate invisible light for sensing a touch image generated by an object;
a hovering light source to directly radiate, to the object, invisible light for sensing a target image generated by the object; and
a light guide to perform a total internal reflection of a light incident from the touch light source.

8. The object sensing apparatus of claim 7, wherein:
the touch light source and the hovering light source are disposed on a same side of the light guide, and
the touch light source is disposed above the hovering light source.

9. The object sensing apparatus of any of claims 1-8, wherein
a plurality of hovering light sources or a plurality of touch light sources are connected to sides of the light guide in a widthwise direction and are linearly disposed in a line source form.

10. The object sensing apparatus of any of claims 1-9 further comprising:
a display panel disposed below the light guide to display an information image.

11. The object sensing apparatus of claim 10, wherein the display panel comprises:
an LCD panel disposed below the light guide to display the information image;
a backlight unit disposed below the LCD panel to provide a uniform planar white light to the LCD panel; and
a sensing array or camera disposed below the backlight unit to sense the touch image or the target image.

12. The object sensing apparatus of claim 10 or 11, wherein the display panel comprises:
a transparent OLED panel disposed below the light guide to form a transparent layer of transmitting a light between pixels; and
a sensing array or camera disposed below the transparent OLED panel to sense the touch image or the target image.

13. The object sensing apparatus of claim 10, 11 or 12, wherein the display panel is an opaque OLED panel having a sensing array inserted to sense the touch image or the target image.

14. A touch object and target object sensing apparatus including a light guide having a substantially planar surface, the apparatus comprising:
a hovering lighting unit positioned at an edge of the light guide and radiating light into the light guide to detect a position of a target object positioned above the planar surface of the light guide; and
a multi-touch lighting unit positioned at an edge of the light guide and radiating light into the light guide to detect a position of a touch object contacting the planar surface of the light guide based on a total internal reflection of the light radiated by the multi-touch lighting unit, and/or
wherein the light guide is configured to have different optical paths including a first optical path for light emitted from the hovering lighting unit and a second optical path for light emitted from the multi-touch lighting unit, and/or
wherein the first optical path comprises upwardly directing the invisible light radiated from the hovering light source towards an upper portion of the light guide and the second optical path comprises performing a total internal reflection on the invisible light radiated from the touch light source.
15. The object sensing apparatus of any of claims 10-14, wherein the opaque material is disposed on a black matrix of the LCD panel,and/or
wherein the display panel is an opaque OLED panel having a sensing array inserted to sense a touch image or the target image.
